Europäisches Patentamt

European Patent Office

Office européen des brevets

(11) Veröffentlichungsnummer: **0 204 322**
**B1**

# EUROPÄISCHE PATENTSCHRIFT

(45) Veröffentlichungstag der Patentschrift:
04.10.89

(51) Int. Cl.⁴: **F 16 C 7/00**, F 16 C 3/02

(21) Anmeldenummer: **86107577.8**

(22) Anmeldetag: **04.06.86**

(54) **Antriebswelle.**

(30) Priorität: **05.06.85 DE 3520252**

(43) Veröffentlichungstag der Anmeldung:
**10.12.86 Patentblatt 86/50**

(45) Bekanntmachung des Hinweises auf die Patenterteilung:
**04.10.89 Patentblatt 89/40**

(84) Benannte Vertragsstaaten:
**DE FR GB IT SE**

(56) Entgegenhaltungen:
**DE-A-2 710 275**
**DE-A-3 011 358**
**DE-A-3 024 636**
**DE-U-1 923 179**
**GB-A-1 510 935**
**US-A-4 173 670**

(73) Patentinhaber: **METZELER Gesellschaft mit beschränkter Haftung, Gneisenaustrasse 15, D-8000 München 50 (DE)**

(72) Erfinder: **Heynemann, Carl, Flurweg 15, D-8028 Taufkirchen (DE)**
Erfinder: **Richter, Otto, Brunnerstrasse 3, D-8000 München40 (DE)**

(74) Vertreter: **Michelis, Theodor, Dipl.- Ing., Gneisenaustrasse 15, D-8000 München 50 (DE)**

## Beschreibung

Die Erfindung bezieht sich auf eine Antriebswelle, insbesondere für Kraftfahrzeuge, mit einem antriebsseitigen und einem abtriebsseitigen starren Wellenteil, sowie mit einer die beiden starren Wellenteile verbindenden Wicklungsanordnung aus wendelförmig umlaufenden Windungen in mindestens zwei getrennten Lagen, die einander nicht berühren, sowie einer die Wicklungsanordnung aufnehmenden Matrix.

Die bei einem Kraftfahrzeug zwischen dem Antriebsmotor und den angetriebenen Rädern angeordnete Antriebswelle muß einerseits gegen die Übertragung von Körperschall isoliert und gleichzeitig relativ leicht sein; außerdem muß sie relativ hohe Drehmomente übertragen können.

Zur Unterdrückung, insbesondere von akustischen Schwingungen, ist eine in der DE-A-2 851 293 beschriebene Antriebswelle so aufgebaut, daß sie eine aus glasfaserverstärktem Kunststoff hergestellte Hohlwelle aufweist, die zwischen Kardangelenken angeordnet ist. Die Fertigung eines solchen Kunststoffteils ist jedoch relativ aufwendig; außerdem erfüllen die mechanischen Eigenschaften dieser Antriebswelle nicht die gestellten Anforderungen.

Darüber hinaus ist aus der DE-U-1 923 179 eine Antriebswelle bekannt, bei der das gerade Wellenstück aus einem biegesteifen bzw. verdrehsteifen Kunststoff hergestellt ist, in den Verstärkungsfasern eingebettet sein können. Je nach Herstellungsverfahren können diese Fasern dabei in die Matrix eingebettet sein, so daß ein Aneinanderreiben einzelner Fasern bei Dreh- oder Biegebewegungen reduziert werden kann. Dies gilt insbesondere auch bei einer Anordnung, wie sie in der GB-A-1 510 935 beschrieben ist.

Ausgehend von dem vorstehend genannten Stand der Technik liegt der vorliegenden Erfindung die Aufgabe zugrunde, eine Antriebswelle zu schaffen, die auch bei hohen dynamischen Belastungen sehr dauerstandsfest ist und bei der insbesondere eine Beschädigung der Windungen einzelner Lagen untereinander durch Abrieb oder andere mechanische Beanspruchungen sicher vermieden wird.

Zur Lösung dieser Aufgabe ist erfindungsgemäß vorgesehen, daß die benachbarten Windungen durch Abstandshalter aus Textil-, Kunststoff- oder Elastomerfasern mit im Vergleich zu den Windungen sehr geringem Querschnitt und geringer Steifigkeit voneinander getrennt sind.

Zweckmäßige Ausgestaltungen werden durch die Merkmale der Unteransprüche beschrieben.

Die mit der Erfindung erzielten Vorteile beruhen darauf, daß es keine direkten Berührungspunkte zwischen den einzelnen Windungen gibt, die nur von der aus einem elastomeren Werkstoff bestehenden Gießmatrix umgeben sind; dem entsprechend wirken keine Reibungskräfte auf die einzelnen Windungen ein, so daß der Verschleiß der Windungen der Wicklungsanordnung auch bei extremer Beanspruchung und langer Lebensdauer vernachlässigbar ist. Auch nach vielen Jahren kann eine solche, beispielsweise in ein Kraftfahrzeug eingebaute Antriebswelle ihre Funktion noch einwandfrei erfüllen.

Die Erfindung wird im folgenden anhand eines Ausführungsbeispiels unter Bezugnahme auf die beiliegenden, schematischen Zeichnungen näher erläutert. Es zeigen

Fig. 1    eine Gesamtansicht einer Antriebswelle für ein Kraftfahrzeug,

Fig. 2    eine Ansicht einer Lage der Wicklungsanordnung, und

Fig. 3    im vergrößerten Maßstab eine Detailansicht der Einzelheit X von Fig. 1. die den Aufbau des aus mehreren Lagen bestehenden Torsionskörpers erkennen läßt.

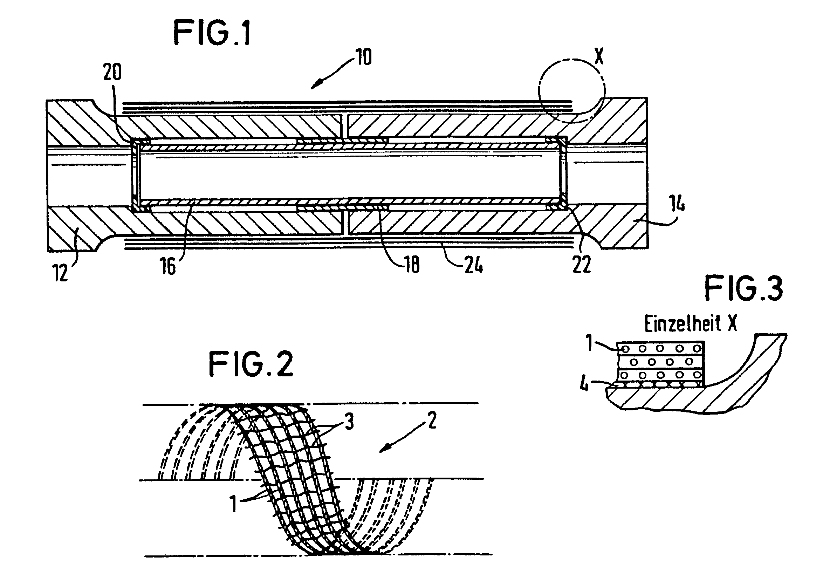

In Fig. 1 ist eine allgemein durch das Bezugszeichen 10 angedeutete Antriebswelle für ein Kraftfahrzeug dargestellt, die aus zwei starren, nicht in direkter Berührung miteinander stehenden Wellenteilen 12 und 14 besteht. Dabei kann es sich beispielsweise bei dem Wellenteil 12 um den antriebsseitigen Anschluß und beim Wellenteil 14 um den abtriebsseitigen Anschluß handeln.

Die beiden Wellenteile 12 und 14 sind als Hohlwellen ausgebildet und nehmen eine als Knickschutz dienende Hülse 16 auf, die je zur Hälfte in den beiden Wellenteilen 12 und 14 angeordnet ist. Die beiden Wellenteile 12 und 14 und die Hülse 16 bestehen im allgemeinen aus einem Metall, insbesondere Stahl.

Um jede direkte Berührung zwischen der Hülse 16 und den beiden Wellenteilen 12 und 14 zu verhindern, sind in den Spalten zwischen der Hülse 16 und den beiden Wellenteilen 12, 14 Schichten oder Zwischenlagen aus einem elastomeren, elastischen Material angeordnet, nämlich in der Mitte eine kurze Hülse 18 sowie die an den Enden ersichtlichen Hülsen 20 und 22 mit abgewinkelten Rändern.

Zur Übertragung von Drehmomenten zwischen den beiden starren Wellenteilen 12 und 14 dient eine allgemein durch das Bezugszeichen 24 angedeutete Wicklungsanordnung, die die äußere Oberfläche der beiden Wellenteile 12 und 14 zwischen den beiden Anschlußflanschen umgibt. Diese Wicklungsanordnung besteht aus Stahldrähten oder Stahl kord und ist an den beiden Enden kraft-, form- und/oder stoffschlüssig mit den Anschlußflanschen der starren Wellenteile 12 und 14 verbunden.

Bei der aus Fig. 1 ersichtlichen Ausführungsform besteht die Wicklungsanordnung 24 aus die Lagen; die Erfindung ist jedoch nicht auf die Verwendung von drei Lagen beschränkt, wobei jedoch zumindest zwei Lagen vorgesehen sein müssen.

Fig. 2 zeigt eine perspektivische Ansicht einer Lage 2 der Wicklungsanordnung 24. Diese Lage 2 besteht aus wendelförmig umlaufenden Strängen 1, die entweder aus separaten Stahldrähten oder aus in Stahlkord eingebetteten Stahldrähten bestehen. Jede Lage kann also beispielsweise durch eine Stahlkord-Schicht gebildet werden und ist an den Enden mit den Anschlußflanschen der Wellenteile 12 und 14 verbunden.

Zu jeder Lage ist, im rechten Winkel zu den einzelnen Strängen 1 verlaufend, eine Folge von Abstandshaltern 3 angeordnet, die aus Textil-, Kunststoff- oder Elastomerfasern bestehen, also einem Material, das keine Kräfte übertragen kann. Die Fäden 3 der Abstandhalter haben im Vergleich zum Stahlkord einen sehr geringen Querschnitt, beispielsweise einen Querschnitt. der nur 10 % des Querschnittes der Stahlstränge in dem Stahlkord entspricht, und eine geringere Steifigkeit, so daß weder Anteile der eingeleiteten Kräfte übertragen noch bei Verschiebungen zueinander Reibungskräfte oder Verschleiß auftreten können.

Die Abstandshalter 3 gewährleisten, daß die übereinander angeordneten Lagen der Wicklungsanordung 24, also die Stränge 1 der einzelnen Lagen, einander nicht berühren können.

Die Wicklungsanordnung aus den verschiedenen Lagen mit den Strängen 1 und den Abstandshaltern 3 ist in eine Matrix 4 eingegossen, was ebenfalls dazu beiträgt, daß weder benachbarte noch übereinander angeordnete Stränge 1 in den verschiedenen Lagen einander berühren können.

Werden die Abstandshalter 3 aus einer Elastomerfaser hergestellt, so wird zweckmäßigerweise das gleiche Material für die Matrix verwendet, gute Ergebnisse werden mit Polyurethan erhalten.

In der Detailansicht nach Fig. 3 sind die einzelnen Stränge 1 in der Matrix 4 zu erkennen. Der Werkstoff der Matrix 4 trägt durch seine gute Haftung an den die Drehmomente übertragenden Strängen 1 zur Dämmung des Körperschalls bei.

Zweckmäßigerweise wird als Werkstoff für die Matrix 4 ein Material mit hohem Verlustwinkel tan $\vartheta$ verwendet. d. h., der Verlustwinkel sollte zwischen 0,05 und 0,3 liegen. Dadurch läßt sich eine schnelle Dämpfung freier und erzwungener Schwingungen der Stränge 1 bewirken.

Wesentlich ist hierbei, daß die als Abstandshalter dienenden Stränge 3 jede Berührung zwischen den einzelnen Strängen 1 verhindern und gleichzeitig auch keine Kräfte übertragen, selbst wenn die Stränge 1 und 3 wie Kett- und Schuß-Stränge verarbeitet sind.

Bestehen die als Abstandshalter dienenden Stränge 3 und die Matrix 4 aus dem gleichen Werkstoff, beispielsweise Polyurethan, so gehen die Abstandshalter 3 nach dem Vergießen in die Matrix 4 über und erfüllen auf diese Weise als einheitlicher, weitgehend homogener Werkstoff die oben erläuterte Funktion.

Als Werkstoff für die Matrix 4 können neben gießfähigen, aushärtenden Polymeren, wie beispielsweise Polyurethan, auch Vulkanisate dienen.

## Patentansprüche

1. Antriebswelle (10), insbesondere für Kraftfahrzeuge, mit einem antriebsseitigen und einem abtriebsseitigen starren Wellenteil (12, 14) sowie mit einer die beiden starren Wellenteile (12, 14) verbindenden Wicklungsanordnung (24) aus wendelförmig umlaufenden Windungen (1) in mindestens zwei getrennten Lagen (2), die einander nicht berühren, sowie einer die Wicklungsanordnung (24) aufnehmenden Matrix, dadurch gekennzeichnet, daß die benachbarten Windungen (1) durch Abstandshalter (3) aus Textil-, Kunststoff- oder Blastomerfasern mit im Vergleich zu den Windungen (1) sehr geringem Querschnitt und geringer Steifigkeit voneinander getrennt sind.

2. Antriebswelle nach Anspruch 1 dadurch gekennzeichnet, daß die Lagen durch Stahldrähte (1) oder Stahlkord gebildet werden.

3. Antriebswelle nach einem der Ansprüche 1 oder 2, dadurch gekennzeichnet, daß die Enden der einzelnen Lagen kraft-, form- und/oder stoffschlüssig mit den starren Wellenteilen (12, 14) verbunden sind.

4. Antriebswelle nach Anspruch 1, dadurch gekennzeichnet, daß die Elastomer-Fasern der Abstandshalter (3) den gleichen chemischen Aufbau wie der Werkstoff für die Matrix (4) haben.

5. Antriebswelle nach Anspruch 1, dadurch gekennzeichnet, daß der Querschnitt der Windungen (1) mindestens fünfmal so groß wie der Querschnitt der Abstandshalter (3) ist.

6. Antriebswelle nach Anspruch 4, dadurch gekennzeichnet, daß die Matrix (4) aus einem elastomeren Werkstoff mit hohem Verlustwinkel besteht.

7. Antriebswelle nach Anspruch 6, dadurch gekennzeichnet, daß der Verlustwinkel (tan $\vartheta$) zwischen 0,05 und 0,3 liegt.

## Claims

1. Drive shaft (10), in particular for motor vehicles having a pinion-end and a power take-off side rigid shaft part (12, 14) as well as a winding arrangement (24) which connects the two rigid shaft parts (12, 14) and comprises helically distributed turns (1) in at least two separate laps (2) which do not touch one another, as well as a matrix which accommodates the winding arrangement (24), characterised in that the adjacent turns (1) are separated from one another by means of spreaders (3) made of textile, synthetic or elastomer fibres having a very small cross-section and a low rigidity compared to the turns (1).

2. Drive shaft according to claim 1, characterised in that the laps are formed by steel wires (1) or steel cord.

3. Drive shaft according to one of claims 1 or 2, characterised in that the ends of the individual laps are connected force-, form- and/or substance-lockingly to the rigid shaft parts (12, 14).

4. Drive shaft according to claim 1, characterised in that the elastomer fibres of the spreaders (3) have the same chemical structure as the material for the matrix (4).

5. Drive shaft according to claim 1, characterised in that the cross-section of the turns (1) is at least five times as great as the cross-section of the spreaders (3).

6. Drive shaft according to claim 4, characterised in that the matrix (4) is made of a low-loss elastomer material.

7. Drive shaft according to claim 6, characterised in that the loss angle (tan $\vartheta$) is between 0.05 and 0.3.

**Revendications**

1. Arbre menant (10), notamment pour des véhicules automobiles, comprenant des parties d'arbre rigides du côté menant (12) et du côté mené (14), ainsi qu'un agencement à enroulement (24) qui relie les deux parties d'arbre rigides (12, 14) et qui est constitué de spires (1) d'allure hélicoïdale en au moins deux couches (2) distinctes qui ne se touchent pas mutuellement, ainsi qu'une matrice de réception de l'agencement à enroulement (24), caractérisé en ce que les spires (1) voisines sont séparées les unes des autres par des éléments intercalaires (3) en fibres textiles, en fibres de matière synthétique ou en fibres d'élastomère de section transversale très petite par rapport aux spires (1) et de rigidité plus faible.

2. Arbre menant suivant la revendication 1, caractérisé en ce que les couches formées de fils d'acier (1) ou de câbles d'acier.

3. Arbre menant suivant l'une des revendications 1 ou 2, caractérisé en ce que les extrémités des couches individuelles sont reliées par coopération de forces, de formes et/ou de matières, aux parties d'arbre rigides (12, 14).

4. Arbre menant suivant la revendication 1, caractérisé en ce que les fibres en élastomère des éléments intercalaires (3) ont la même structure chimique que le matériau de la matrice (4).

5. Arbre menant suivant la revendication 1, caractérisé en ce que la section transversale des spires (1) représente au moins cinq fois la section transversale des éléments intercalaires (3).

6. Arbre menant suivant la revendication 4, caractérisé en ce que la matrice (4) est en un matériau élastomère ayant un grand angle de perte.

7. Arbre menant suivant la revendication 6, caractérisé en ce que l'angle de perte (tg $\delta$) est compris entre 0,05 et 0,3.

EP 0 204 322 B1

FIG.1

FIG.2

FIG.3

Einzelheit X

1